# EUROPÄISCHE PATENTANMELDUNG

(11) **EP 3 181 331 A1**
(43) Veröffentlichungstag der Anmeldung: **21.06.2017**
(21) Anmeldenummer: 15201102.9
(22) Anmeldetag: 18.12.2015
(51) Int. Cl.: B29C 65/16, B29C 65/78, F21S 8/10, F21V 17/00

(54) **VERFAHREN UND VORRICHTUNG ZUM LASERSCHWEISSEN VON DREIDIMENSIONALEN KUNSTSTOFFTEILEN**

(71) Anmelder: Leister Technologies AG, 6056 Kägiswil (CH)
(72) Erfinder: Gubler, Ulrich, 6343 Buonas (CH); Wenzlau, Carsten, 6055 Alpnach (CH); Rauschenberger, Jens, 6024 Hildisrieden (CH)
(74) Vertreter: Klocke, Peter

(57) **Zusammenfassung**

Die Erfindung betrifft ein Verfahren und eine Vorrichtung zum Verbinden von wenigstens zwei sich dreidimensional erstreckenden Werkstücken (1, 3) mittels Laserdurchstrahlschweißen, wobei die Werkstücke (1, 3) mit einer Spannvorrichtung (14) in einem Verbindungsbereich (4, 4') lokal aneinandergepresst werden. Erfindungsgemäß ist vorgesehen, dass der Verbindungsbereich (4, 4') jeweils in wenigstens zwei aneinander angrenzende Verbindungsbereichsegmente (6, 6', 7, 7') unterteilt wird, die gleichzeitig jeweils von einem Laserstrahl (9, 9') simultan oder quasisimultan mit einem unterschiedlichen Einfallswinkel beaufschlagt werden.

## Beschreibung

Die Erfindung betrifft ein Verfahren zum Verbinden von wenigstens zwei sich dreidimensional erstreckenden Werkstücken aus thermoplastischem Kunststoffmaterial mittels Laserdurchstrahlschweißen, wobei die Werkstücke mit einer Spannvorrichtung in einem Verbindungsbereich lokal in einen gegenseitigen Berührungskontakt gebracht sowie aneinander gepresst werden und anschließend in dem Verbindungsbereich mit wenigstens einem von einer Laserquelle ausgehenden Laserstrahl temporär bestrahlt, erhitzt und aufgeschmolzen werden, so dass beim Abkühlen der Werkstücke im Verbindungsbereich eine spaltfreie stoffschlüssige Verbindung ausgebildet wird, wobei die Werkstücke zumindest im Verbindungsbereich stellenweise einen gekrümmten Verlauf aufweisen.

Die Erfindung betrifft außerdem eine Schweißvorrichtung zum Laserdurchstrahlschweißen, mit der das vorstehend beschriebene Verfahren ausführbar ist.

Das Verbinden von sich dreidimensional erstreckenden Werkstücken mittels Laserdurchstrahlschweißen ist seit langem bekannt. Dazu gibt es eine Vielzahl von bekannten Schweißvorrichtungen und speziellen Schweißverfahren, die diese Art der Verbindungstechnik nutzen. Für diese Verbindungstechnik werden üblicherweise Schweißvorrichtungen verwendet, die eine Spannvorrichtung für die Werkstücke aufweisen, die die Werkstücke in einem Verbindungsbereich lokal in einen gegenseitigen Berührungskontakt bringt sowie aneinander presst und die eine Laserquelle umfasst, von der ein Laserstrahl ausgeht, der den Verbindungsbereich temporär aufschmilzt, so dass beim Abkühlen der Werkstücke im Verbindungsbereich eine spaltfreie stoffschlüssige Verbindung herstellbar ist.

Bei größeren dreidimensionalen Kunststoffteilen, die im Spritzgussverfahren hergestellt werden, liefert die Spritzgussmaschine in der Regel keine Teile, die spaltfrei aufeinanderlegbar sind. Während bei biegeschlaffen Teilen der Spalt zwischen den Werkstücken problemlos mit einer Spannvorrichtung geschlossen und damit die Werkstücke spaltlos miteinander verbindbar sind, können bei biegesteifen Teilen die Werkstücke durch eine Spannvorrichtung nicht genügend zusammengedrückt werden, um den Spalt zu überbrücken, ohne dass Spannungsrisse entstehen, die die Werkstücke schädigen. Um bei biegesteifen Teilen dennoch eine spaltfreie Verbindung der Teile zu ermöglichen, ohne die Teile zu schädigen, ist es bekannt, einen Schmelzsteg im Verbindungsbereich vorzusehen, der beim Verschweißen der Teile miteinander abgeschmolzen wird und den Spalt sicher schließt. Der Laserquelle kann dabei den Verbindungsbereich der Werkstücke simultan oder quasisimultan mit Laserlicht, d.h. mit einem Laserstrahl oder einem Laserstrahlbündel beaufschlagen. Beim simultanen Prozess werden Laserstrahlen oder Laserstrahlbündel entlang dem gesamten Verbindungsbereich gleichzeitig auf die Werkstücke gerichtet, um die Schweißnaht zu erzeugen. Dazu wird beispielsweise eine Lasermaske oder ein diffraktives optisches Element verwendet. Allerdings ist eine derartige Schweißvorrichtung teuer und unflexibel. Beim quasisimultanen Prozess, bei dem der Laserstrahl über einen Scannerkopf auf den Verbindungsbereich gerichtet und mit hoher Geschwindigkeit vielfach entlang dem Verbindungsbereich geführt wird, bekommt man bei konvex gebogenen Bauteilen das Problem, dass bei einem ortsfesten Scannerkopf der Laserstrahl nicht an allen Stellen des Verbindungsbereiches annähernd senkrecht einfällt. Stattdessen beaufschlagt er den Verbindungsbereich der Werkstücke an manchen Stellen in einem flachen Winkel, so dass ein großer Anteil des Laserlichtes reflektiert wird und das Aufschmelzen des Kunststoffmaterials im Bereich des Verbindungsbereiches ungleichmäßig erfolgt. Ein typisches Bauteil für diese Problematik ist beispielsweise das Rücklicht eines Fahrzeugs, das um die Ecke gebogen ist.

Zum Stand der Technik für das Laserdurchstrahlschweißen von sich dreidimensional erstreckenden Werkstücken aus thermoplastischem Kunststoffmaterial wird beispielhaft auf die Druckschrift US 9,061,468 B2 verwiesen. Diese Schrift offenbart eine Vorrichtung und ein Verfahren zum Verbinden von Kunststoffteilen mittels eines Laserscanners, der einen Laserstrahl entlang dem Verbindungsbereich zirkulierend mit hoher Geschwindigkeit führt. Dabei werden die beiden zu verbindenden Werkstücke durch eine zentral und damit fern von dem Verbindungsbereich angeordnete Spannvorrichtung für den eigentlichen Schweißvorgang zusammengepresst. Um das durch den variableren Einfallswinkel bedingte Reflexionsproblem zu verringern, wird eine Antireflexionsschicht verwendet, die auf die dem Laserscanner zugewandte Oberfläche des von dem Laserlicht beaufschlagten Werkstücks aufgetragen ist.

Das in diesem Stand der Technik vorgeschlagene Verfahren ist speziell zum Verschweißen von ein Fahrzeugrücklicht bildenden Kunststoffteilen vorgesehen, die entsprechend biegesteif ausgebildet sind. Als nachteilig wird dabei angesehen, dass eine Antireflexionsschicht notwendig ist, um zu gewährleisten, dass die Leistung des Laserstrahls ohne Reflexion von Laserlicht, d. h. nahezu vollständig auf die Werkstücke übertragen wird. Zudem erscheint es unsicher, ob die Werkstücke aufgrund der zentral wirkenden Spannvorrichtung vollkommen spaltfrei und damit dicht miteinander verbindbar sind.

Ausgehend von dem vorstehend genannten Stand der Technik liegt der Erfindung die Aufgabe zugrunde eine Möglichkeit vorzuschlagen, mit der wenigstens zwei sich dreidimensional erstreckende Werkstücke aus thermoplastischem Kunststoffmaterial, bei dem zumindest der Verbindungsbereich der Werkstücke stellenweise in Richtung des Laserstrahls einen gekrümmten Verlauf aufweist, sicher spaltfrei ohne die Notwendigkeit einer Antireflexionsschicht miteinander verbindbar sind.

Erfindungsgemäß wird diese Aufgabe durch ein Verfahren mit den Merkmalen des Patentanspruchs 1 sowie durch eine Vorrichtung mit den Merkmalen des nebengeordneten Patentanspruchs 10 gelöst. Weitere vorteilhafte Ausgestaltungen der Erfindung sind den jeweils rückbezogenen Patentansprüchen zu entnehmen.

Danach wird bei dem erfindungsgemäßen Verfahren zum Verbinden von wenigstens zwei sich dreidimensional erstreckenden Werkstücken aus thermoplastischem Kunststoffmaterial mittels Laserdurchstrahlschweißen der Verbindungsbereich der Werkstücke in wenigstens zwei aneinander angrenzende Verbindungsbereichsegmente unterteilt, die gleichzeitig jeweils von einem Laserstrahl simultan oder quasisimultan mit unterschiedlichem Einfallswinkel beaufschlagt werden. Dabei wird der Einfallswinkel so gewählt, dass der jeweilige Laserstrahl möglichst senkrecht auf das zugeordnete Verbindungsbereichsegment auftrifft, so dass eine anteilige Reflexion der Laserstrahlen an der Oberfläche des zu der Laserquelle weisenden Werkstückes minimiert wird.

Vorzugsweise werden die mindestens zwei Laserstrahlen von verschiedenen Laserscannerköpfen ausgestrahlt, die in einem Winkel zueinander gegenüber den Werkstücken angeordnet sind. Der Winkel wird entsprechend der unterschiedlichen Neigung der Verbindungsbereichsegmente gewählt, wobei die Laserscannerköpfe mit einem seitlichen Abstand einander gegenüber angeordnet werden. Somit werden für das quasisimultane Schweißen zwei oder mehr Laserscannerköpfe verwendet, die aus unterschiedlichen Winkeln auf den gebogenen Verbindungsbereich entsprechend der Kontur der zu erzeugenden Schweißnaht der beiden Werkstücke gerichtet werden und die sich die Gesamtkontur der Laserschweißnaht teilen. Durch den Winkel zwischen den mindestens zwei Laserscannerköpfen können diese jeweils in dem zugeordneten Verbindungsbereichsegment größtenteils nahezu senkrecht auf die Oberfläche der beiden zu verbindenden Werkstücke strahlen und so eine Schweißnaht hoher Güte zwischen den Werkstücken im Verbindungsbereich erzeugen. Dabei hat es sich als besonders günstig erwiesen, die Scannerköpfe in einem Winkel größer 20 Grad zueinander anzuordnen. Vorzugsweise beaufschlagen die Laserstrahlen der verschiedenen Laserscannerköpfe die zugeordneten Verbindungsbereichsegmente jeweils mit einem in sich geschlossenen Teilkonturenverlauf. Die so erzeugten Teilkonturenverläufe ergeben zusammen einen geschlossenen Gesamtkonturenverlauf, in dem die beiden Werkstücke im Verbindungsbereich für die stoffschlüssige Verbindung der Werkstücke temporär aufgeschmolzen werden. Die von den mindestens zwei Laserköpfen ausgehenden Laserstrahlen sind zeitlich und/oder räumlich synchronisiert.

Bei einer bevorzugten Ausführungsform der Erfindung werden die jeweiligen Laserstrahlen mit einem Überlappungsabschnitt an einander angrenzenden Enden der Verbindungsbereichsegmente auf den Verbindungsbereich gerichtet. Dabei sind die beiden Laserstrahlen seitlich und/oder räumlich derart synchronisiert, dass die Laserstrahlen nie gleichzeitig den Überlappungsabschnitt bestrahlen. Vorzugsweise beaufschlagen die Laserstrahlen den jeweiligen Überlappungsabschnitt alternierend.

Bei einer Ausführungsform der Erfindung werden Werkstücke miteinander spaltfrei verbunden, bei denen zumindest ein Werkstück im Verbindungsbereich einen Schmelzsteg aufweist. Mit dem Abschmelzen des Schmelzsteges, der vorzugsweise zwischen 0,5 und 2 mm beträgt, kann der Spalt zwischen den zu verbindenden Werkstücken problemlos auch bei stark verzogenen Spritzgießteilen geschlossen werden, wobei es natürlich notwendig ist, dass der gesamte Verbindungsbereich gleichzeitig plastifiziert wird. Dies ist jedoch bei dem erfindungsgemäßen Verfahren sichergestellt, indem alle aneinander angrenzenden Verbindungsbereichsegmente gleichzeitig jeweils von einem Laserstrahl simultan oder quasisimultan beaufschlagt werden.

Bei einer bevorzugten Ausführungsform des erfindungsgemäßen Verfahrens wird die von den Laserstrahlen auf die Werkstücke übertragene Energie geregelt. Dazu wird vorzugsweise die Temperatur im Verbindungsbereich der Werkstücke kontaktlos erfasst, beispielsweise mit einem Pyrometer, und die Energieeinbringung in die jeweiligen Verbindungsbereichsegmente abhängig von der erfassten Temperatur geändert, indem vorzugsweise die Bewegungsgeschwindigkeit des Laserstrahls entsprechend vergrößert oder verkleinert wird.

Bei einer besonders bevorzugten Ausführungsform des erfindungsgemäßen Verfahrens wird zum Verspannen der Werkstücke miteinander eine Spannvorrichtung verwendet, die eine obere und eine untere Spanneinheit umfasst, von denen mindestens eine unterteilt ist und mindestens zwei einzelne Spannsegmente aufweist. Die einzelnen Spannsegmente sind den jeweiligen Verbindungsbereichsegmenten zugeordnet und weisen jeweils separate Kraftelemente zur Bereitstellung einer Anpresskraft auf, die die zu verbindenden Werkstücke zwischen der oberen und der unteren Spanneinheit klemmen und miteinander verspannen.

Vorzugsweise werden die Spannsegmente der oberen oder der unteren Spanneinheit von den Laserstrahlen durchstrahlt, wobei die Spannsegmente, beispielsweise der oberen Spanneinheit, metallisch ausgebildet sind und die Werkstücke außerhalb des Verbindungsbereiches oder innerhalb des Verbindungsbereiches pressen. Zum Durchtritt der Laserstrahlen sind entsprechende Fenster zwischen und/oder in den Spannsegmenten ausgebildet. Vorzugsweise wird eine obere Spanneinheit verwendet, bei der die Spannsegmente transparent ausgebildet sind und die unterschiedlichen Verbindungsbereichsegmente direkt kraftbeaufschlagen.

Die erfindungsgemäße Schweißvorrichtung zum Verbinden von wenigstens zwei sich dreidimensional erstreckenden Werkstücken aus thermoplastischem Kunststoffmaterial mittels Laserdurchstrahlschweißen weist mindestens eine Laserquelle auf, von der wenigstens zwei Laserstrahlen, die gleichzeitig jeweils simultan oder quasisimultan wenigstens zwei aneinander angrenzende Verbindungsbereichsegmente des Verbindungsbereiches mit unterschiedlichen Einfallswinkeln beaufschlagen. Vorzugsweise gehen diese Laserstrahlen von verschiedenen Laserscannerköpfen aus, die in einem Winkel zueinander angeordnet sind.

Vorteilhafterweise sind mit den zwei oder mehr Laserstrahlen aneinandergrenzende Enden der Verbindungsbereichsegmente mit dem jeweils zugeordneten Laserstrahl alternierend beaufschlagbar. Bei einer bevorzugten Ausführungsform der erfindungsgemäßen Schweißvorrichtung umfasst die Spannvorrichtung eine obere und eine untere Spanneinheit, die die zu verbindenden Werkstücke zwischen sich klemmen und von denen zumindest eine unterteilt ist und mindestens zwei einzelne Spannsegmente aufweist, die insbesondere den aneinander angrenzenden Verbindungsbereichsegmenten des Verbindungsbereiches zugeordnet sind. Bei einer Ausführungsform der vorgeschlagenen Schweißvorrichtung übergreifen die Spannsegmente die Verbindungsbereichsegmente und sind von den Laserstrahlen durchstrahlbar.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und den beigefügten Figuren. Es zeigen:
- Figur 1: zwei sich dreidimensional erstreckende Werkstücke, die mit dem erfindungsgemäßen Schweißverfahren und der erfindungsgemäßen Schweißvorrichtung zu einer Leuchteneinheit mittels Laserdurchstrahlschweißen verbindbar sind, einzeln in Seitenansicht vor dem Verbinden;
- Figur 2: die Werkstücke aus Figur 1, verschweißt miteinander zu der Leuchteneinheit;
- Figur 3: die Beaufschlagung der Werkstücke mit zwei Laserstrahlen, die von zwei Laserscannerköpfen ausgehen, während des Schweißvorgangs der Leuchteneinheit; und
- Figur 4: eine Spannvorrichtung der erfindungsgemäßen Schweißvorrichtung, mit einer oberen Spanneinheit (Fig. 4a) und einer unteren Spanneinheit (Fig. 4b).

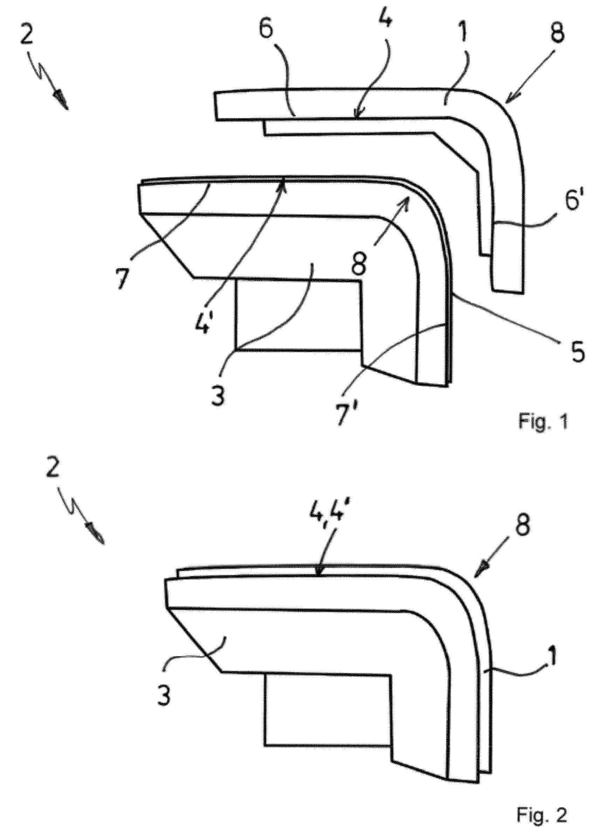

Die Figur 1 zeigt beispielhaft ein erstes Werkstück 1, das ein frontseitiges Leuchtenteil einer Leuchteneinheit 2 bildet, und ein zweites Werkstück 3, das ein rückwärtiges Leuchtenteil der Leuchteneinheit 2 bildet, vor dem Verbinden im Laserdurchstrahlverfahren. Das erste Werkstück 1 ist für Laserlicht transparent und das zweite Werkstück 3 für Laserlicht absorbierend ausgebildet. Das transparente Leuchtenteil 1 sowie das nicht transparente Leuchtenteil 3 sind abgewinkelt ausgeführt, insbesondere mit Blick auf das erste Leuchtenteil 1 konvex gebogen. Sie weisen jeweils einen Verbindungsbereich 4, 4' auf, die zur Anlage aneinander vorgesehen sind und anhand denen eine die beiden Leuchtenteile 1, 3 zu verbindende Schweißnaht erzeugbar ist. Um die beiden Leuchtenteile 1, 3 spaltfrei miteinander zu verbinden, ist bei dem nicht transparenten Leuchtenteil 3 im Bereich des Verbindungsbereiches 4' ein Schmelzsteg 5 an das Leuchtenteil 3 angeformt. Dabei ist der Verbindungsbereich 4 des Leuchtenteils 1 in ein erstes Verbindungsbereichsegment 6 und ein zweites Verbindungsbereichsegment 6' und der Verbindungsbereich 4' des Leuchtenteils 3 in ein zugeordnetes erstes Verbindungsbereichsegment 7 und ein zweites Verbindungsbereichsegment 7' unterteilt, die jeweils von einer zentralen Knickstelle 8 der Leuchteneinheit 2 bestimmt sind.

Die Figur 2 zeigt die Werkstücke 1, 3, d. h. die Leuchtenteile 1, 3 zur Leuchteneinheit 2 verschweißt miteinander. Der Schmelzsteg 5 des zweiten Leuchtenteils 3 ist abgeschmolzen und überbrückt einen in der Figur 2 nicht sichtbaren Spalt zwischen dem Leuchtenteil 1 und dem Leuchtenteil 3, so dass die Leuchteneinheit 2 im Verbindungsbereich 4, 4' spaltfrei ausgebildet ist.

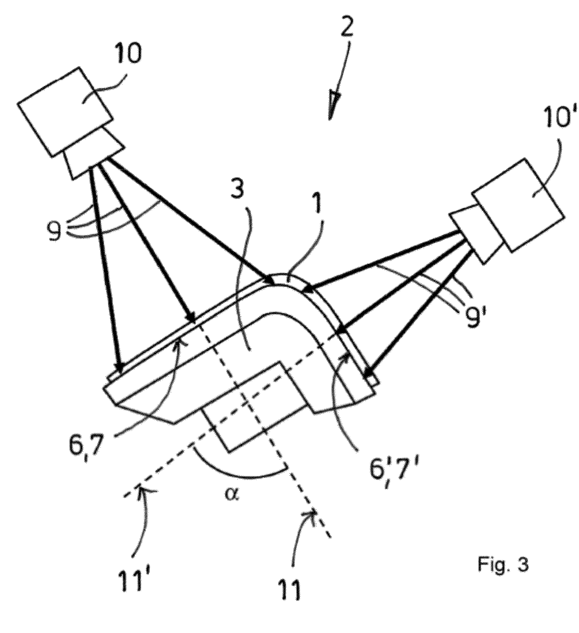

Die Figur 3 zeigt die Beaufschlagung der Leuchtenteile 1, 3 mit Laserstrahlen 9, 9', die von zwei Laserscannerköpfen 10, 10' ausgehen, während des Schweißvorgangs der Leuchteneinheit 2. Die Laserstrahlen 9 des Laserscannerkopfes 10 beaufschlagen die im gegenseitigen Berührungskontakt befindlichen Verbindungsbereichsegmente 6, 7 des ersten Leuchtenteils 1 bzw. des zweiten Leuchtenteils 3 und die Laserstrahlen 9' des zweiten Laserscannerkopfes 10' die Verbindungsbereichsegmente 6', 7' des ersten Leuchtenteils 1 bzw. des zweiten Leuchtenteils 3. Dabei sind die beiden Laserscannerköpfe 10, 10' derart gegenüber den Leuchtenteilen 1, 3 angeordnet, dass die optischen Achsen 11, 11' der Laserscannerköpfe 10, 10' jeweils orthogonal zu den zugeordneten Verbindungsbereichsegmenten 6, 7 bzw. 6', 7' verlaufen. Damit sind die beiden Laserscannerköpfe 10, 10' mit seitlichem Abstand zueinander in einem Winkel α angeordnet, in dem sich die optischen Achsen 11, 11' der Laserscannerköpfe 10, 10' schneiden. Der Schnittwinkel beträgt typisch mehr als 20°. In dem dargestellten Ausführungsbeispiel sind die beiden Laserscannerköpfe 10, 10' in einem Winkel von annähernd 80° zueinander angeordnet.

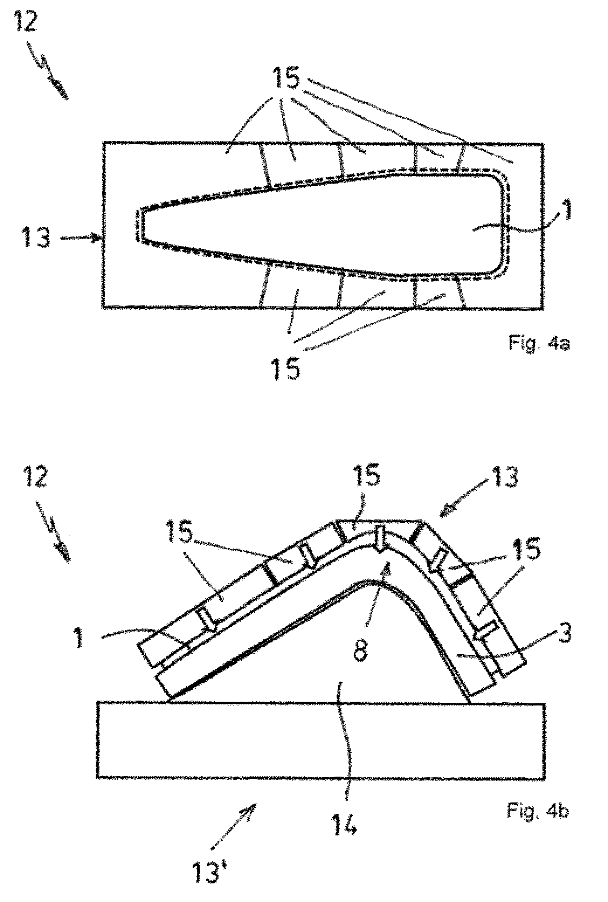

Die Figur 4 zeigt ein Ausführungsbeispiel einer Spannvorrichtung 12 der erfindungsgemäßen Schweißvorrichtung, mit einer oberen Spanneinheit 13 und einer unteren Spanneinheit 13'. Die untere Spanneinheit 13' weist eine Werkstückaufnahme 14 für das zweite Werkstück 3, d. h. das rückwärtige Leuchtenteil 3 auf, die das Leuchtenteil 3 unverrückbar trägt. Auf dem Leuchtenteil 3 ist das erste Werkstück 1, d. h. das Leuchtenteil 1 angeordnet und wird von der oberen Spanneinheit 13 gegen das untere Leuchtenteil 3 gepresst, das sich an der Werkstückaufnahme 14 abstützt. Die untere Spanneinheit 13' ist einstückig ausgebildet, während die obere Spanneinheit 13 eine Anzahl von Spannsegmenten 15 umfasst, die die beiden Leuchtenteile 1, 3 gegeneinander pressen. Dabei wird die Anpresskraft in die Spannsegmente 15 derart über in der Figur nicht dargestellte Kraftelemente eingeleitet, dass die beiden Leuchtenteile 1, 3 zwischen den Spanneinheiten 13, 13' eingeklemmt sind. Bei dem in der Figur 4 gezeigten Ausführungsbeispiel der Spannvorrichtung 12 sind die nicht gezeigten Kraftelemente derart zueinander und/oder gegenüber der unteren Spanneinheit 13' bzw. den Spannsegmenten 15 der oberen Spanneinheit 13 angeordnet, dass die Anpresskraft bei allen Spannsegmenten 15 in unterschiedliche Richtung wirkt, vorzugsweise alle Spannsegmente 15 orthogonal auf das erste Leuchtenteil 1 presst. Alternativ ist es auch möglich, die Kraftelemente derart anzuordnen, dass die Anpresskraft bei jedem Spannsegment 15 in die gleiche Richtung wirkt. In einem solchen Fall werden nicht alle Spannsegmente 15 orthogonal auf das erste Leuchtenteil 1 gepresst. So kann beispielsweise das mittlere an der Knickstelle 8 der Leuchteneinheit 2 angeordnete Spannsegmente 15 orthogonal auf das erste Leuchtenteil 1 gepresst werden, während die anderen Spannsegmente 15 nicht orthogonal auf das erste Leuchtenteil 1 gepresst werden. Vorzugsweise werden dabei zumindest zwei der Spannelemente 15, die den Verbindungsbereichsegmenten 6, 7 und/oder 6', 7' zugeordnet sind, im gleichen Winkel gegen die erste Leuchtenteil 1 gepresst.

## Patentansprüche

1. Verfahren zum Verbinden von wenigstens zwei sich dreidimensional erstreckenden Werkstücken (1, 3) aus thermoplastischem Kunststoffmaterial mittels Laserdurchstrahlschweißen, wobei die Werkstücke (1, 3) mit einer Spannvorrichtung (14) in einem Verbindungsbereich (4, 4') lokal in einen gegenseitigen Berührungskontakt gebracht sowie aneinander gepresst werden und anschließend in dem Verbindungsbereich (4, 4') mit wenigstens einem von einer Laserquelle (10, 10') ausgehenden Laserstrahl (9, 9') temporär bestrahlt, erhitzt und aufgeschmolzen werden, sodass beim Abkühlen der Werkstücke (1, 3) im Verbindungsbereich (4, 4') eine spaltfreie stoffschlüssige Verbindung ausgebildet wird, wobei die Werkstücke (1, 3) zumindest im Verbindungsbereich (4, 4') in Richtung des Laserstrahls (9, 9') stellenweise einen gekrümmten Verlauf aufweisen, **dadurch gekennzeichnet, dass** der Verbindungsbereich (4, 4') in wenigstens zwei aneinander angrenzende Verbindungsbereichsegmente (6, 6', 7, 7') unterteilt wird, die gleichzeitig jeweils von einem Laserstrahl (9, 9') simultan oder quasisimultan mit unterschiedlichem Einfallswinkel beaufschlagt werden.

2. Verfahren nach Anspruch 1, **dadurch gekennzeichnet, dass** die mindestens zwei Laserstrahlen (9, 9') von verschiedenen Laserscannerköpfen (10, 10') ausgestrahlt werden, die in einem Winkel α zueinander angeordnet sind.

3. Verfahren nach Anspruch 1 oder 2, **dadurch gekennzeichnet, dass** die jeweiligen Laserstrahlen (9, 9') mit einem Überlappungsabschnitt an aneinander grenzenden Enden der Verbindungsbereichsegmente (6, 6', 7, 7') auf den Verbindungsbereich (4, 4') gerichtet werden.

4. Verfahren nach Anspruch 3, **dadurch gekennzeichnet, dass** die jeweiligen Laserstrahlen (9, 9') den Überlappungsabschnitt alternierend beaufschlagen.

5. Verfahren nach einem der vorangegangenen Ansprüche, **dadurch gekennzeichnet, dass** Werkstücke (1, 3) miteinander spaltfrei verbunden werden, bei denen zumindest ein Werkstück (1, 3) im Verbindungsbereich (4, 4') einen Schmelzsteg (5) aufweist.

6. Verfahren nach einem der vorangegangenen Ansprüche, **dadurch gekennzeichnet, dass** die von den Laserstrahlen (9, 9') auf die Werkstücke (1, 3) übertragene Energie geregelt wird.

7. Verfahren nach einem der vorangegangenen Ansprüche, **dadurch gekennzeichnet, dass** eine Spannvorrichtung (14) verwendet wird, die eine obere und eine untere Spanneinheit (13, 13') umfasst, von denen zumindest eine unterteilt ist und mindestens zwei einzelne Spannsegmente (15) aufweist.

8. Verfahren nach Anspruch 7, **dadurch gekennzeichnet, dass** die Spannsegmente (15) von den Laserstrahlen (9, 9') durchstrahlt werden.

9. Verfahren nach Anspruch 7 oder 8, **dadurch gekennzeichnet, dass** mit den Spannsegmenten (15) jeweils unterschiedliche Verbindungsbereichsegmente (6, 6', 7, 7') der Werkstücke aneinander gepresst werden.

10. Schweißvorrichtung zum Verbinden von wenigstens zwei sich dreidimensional erstreckenden Werkstücken aus thermoplastischem Kunststoffmaterial mittels Laserdurchstrahlschweißen, mit einer Spannvorrichtung (14) für die Werkstücke (1, 3), die die Werkstücke (1, 3) in einem Verbindungsbereich (4, 4') lokal in einen gegenseitigen Berührungskontakt bringt sowie aneinander presst, und mit wenigstens einer Laserquelle (10, 10'), von der ein Laserstrahl (9, 9') ausgeht, der den Verbindungsbereich (4, 4') temporär bestrahlt, erhitzt und aufschmilzt, sodass beim Abkühlen der Werkstücke (1, 3) im Verbindungsbereich (4, 4') eine spaltfreie stoffschlüssige Verbindung entsteht, wobei die Werkstücke (1, 3) zumindest im Verbindungsbereich (4, 4') in Richtung des Laserstrahls stellenweise einen gekrümmten Verlauf aufweisen, **gekennzeichnet durch** mindestens zwei Laserstrahlen (9, 9'), die gleichzeitig jeweils simultan oder quasisimultan wenigstens zwei aneinander angrenzende Verbindungsbereichsegmente (6, 6', 7, 7') des Verbindungsbereichs (4, 4') mit unterschiedlichem Einfallswinkel beaufschlagen.

11. Schweißvorrichtung nach Anspruch 10, **dadurch gekennzeichnet, dass** die Laserstrahlen (9, 9') von verschiedenen Laserscannerköpfen (10, 10') ausgehen, die in einem Winkel α zueinander angeordnet sind.

12. Schweißvorrichtung nach Anspruch 10 oder 11, **dadurch gekennzeichnet, dass** aneinander grenzende Enden der Verbindungsbereichsegmente (6, 6', 7, 7') mit den jeweiligen Laserstrahlen (9, 9') alternierend beaufschlagbar sind.

13. Schweißvorrichtung nach einem der vorangegangenen Ansprüche 10 bis 12, **dadurch gekennzeichnet, dass** die Spannvorrichtung (15) eine obere und eine untere Spanneinheit (13, 13') umfasst, von denen zumindest eine unterteilt ist und mindestens zwei einzelne Spannsegmente aufweist.

14. Schweißvorrichtung nach Anspruch 13, **dadurch gekennzeichnet, dass** die Spannsegmente (15) die Verbindungsbereichsegmente (6, 6', 7, 7') übergreifen und von den Laserstrahlen (9, 9') durchstrahlbar sind.

15. Schweißvorrichtung nach Anspruch 13 oder 14, **dadurch gekennzeichnet, dass** die Spannsegmente (15) jeweils unterschiedliche Verbindungsbereichsegmente (6, 6', 7, 7') der Werkstücke (1, 3) aneinander pressen.
